# EUROPEAN PATENT APPLICATION

(11) **EP 4 503 202 A1**
(43) Date of publication of application: **05.02.2025**
(21) Application number: 24185551.9
(22) Date of filing: 28.06.2024
(51) Int. Cl.: H01M 4/62, H01M 4/66, H01M 10/0525, H01M 4/02

(54) **NEGATIVE ELECTRODE PLATE, SECONDARY BATTERY CONTAINING SAME, AND ELECTRONIC DEVICE**

(30) Priority: 31.07.2023 CN 202310952106
(71) Applicant: Ningde Amperex Technology Ltd., Ningde City, Fujian 352100 (CN)
(72) Inventor: HU, Kewen, Ningde City, Fujian Province, People s Republic of China, 352100 (CN)
(74) Representative: Icosa

(57) **Abstract**

A negative electrode plate includes a negative current collector, an undercoating layer disposed on a surface of the negative current collector, and a negative active material layer disposed on a surface of the undercoating layer. The undercoating layer includes an inorganic conductive agent, a conductive polymer, and a binder. The inorganic conductive agent includes single-walled carbon nanotubes. A G/D ratio of a Raman spectrum of the single-walled carbon nanotubes is 15 to 120.

## Description

### BACKGROUND

### 1. Technical Field

This application relates to the field of energy storage devices, and in particular, to a negative electrode plate, a secondary battery containing the negative electrode plate, and an electronic device.

### 2. Description of the Related Art

With the advancement of technology and the increase in the demand for mobile devices, the demand for secondary batteries (such as a lithium-ion battery) is increasing significantly. Lithium-ion batteries with both a high energy density and excellent lifespan and cycle performance are one of the research topics.

In a charge-discharge cycle, lithium ions are repeatedly shuttled between a positive electrode and a negative electrode of the lithium-ion battery through intercalation and deintercalation. With the intercalation and deintercalation of the lithium ions, the volume of an active material expands and shrinks. During the cycle, the volume of a negative active material (for example, graphite, and silicon-based material) expands and shrinks drastically. In existing technologies, the bonding force of the active material affixed to a surface of a negative current collector is relatively low. With the expansion of the volume of the active material during the cycle, the negative active material layer affixed to the surface of the current collector is very prone to detach from the surface of the current collector, thereby resulting in film exfoliation of the electrode plate, and in turn, increasing the internal resistance and deteriorating the cycle performance.

### SUMMARY

An objective of this application is to provide a negative electrode plate that possesses both a high bonding force and a low internal resistance.

A first aspect of this application provides a negative electrode plate. The negative electrode plate includes a negative current collector, an undercoating layer disposed on a surface of the negative current collector, and a negative active material layer disposed on a surface of the undercoating layer. The undercoating layer includes an inorganic conductive agent, a conductive polymer, and a binder. The inorganic conductive agent includes single-walled carbon nanotubes. A G/D ratio of a Raman spectrum of the single-walled carbon nanotubes is 15 to 120.

The undercoating layer applied to the negative electrode plate in this application to increase the bonding force between the negative active material layer and the negative current collector. In addition, the undercoating layer includes single-walled carbon nanotubes with a G/D ratio being 15 to 120, so that the undercoating layer exhibits a relatively high conductivity, thereby reducing the internal resistance of the secondary battery to which the negative electrode plate is applied. Therefore, the negative electrode plate of this application possesses a low internal resistance while maintaining a high bonding force.

According to some embodiments of this application, the G/D ratio of the Raman spectrum of the single-walled carbon nanotubes is 65 to 120.

According to some embodiments of this application, the inorganic conductive agent further includes multi-walled carbon nanotubes. A G/D ratio of a Raman spectrum of the multi-walled carbon nanotubes is 1 to 6.

According to some embodiments of this application, the G/D ratio of the Raman spectrum of the multi-walled carbon nanotubes is 4 to 6.

According to some embodiments of this application, based on a mass of the undercoating layer, a mass percent of the single-walled carbon nanotubes is 40 wt% to 80 wt%, and a mass percent of the multi-walled carbon nanotubes is 10 wt% to 50 wt%. In a case that the inorganic conductive agent is single-walled carbon nanotubes and multi-walled carbon nanotubes, when the mass percent of the single-walled carbon nanotubes and the mass percent of the multi-walled carbon nanotubes fall within the above ranges, the negative electrode plate possesses a relatively large bonding force, and the secondary battery is endowed with a relatively low internal resistance and a relatively high first-cycle Coulombic efficiency.

According to some embodiments of this application, based on a mass of the undercoating layer, a mass percent of the single-walled carbon nanotubes is 60 wt% to 90 wt%. In a case that the inorganic conductive agent is single-walled carbon nanotubes, when the mass percent of the single-walled carbon nanotubes falls within the above range, the negative electrode plate possesses a relatively large bonding force, and the secondary battery is endowed with a relatively low internal resistance and a relatively high first-cycle Coulombic efficiency.

According to some embodiments of this application, metal nanoparticles are deposited on a surface of the single-walled carbon nanotubes and/or a surface of the multi-walled carbon nanotubes, thereby improving the electrical conductivity of the undercoating layer, reducing the internal resistance of the secondary battery, and improving the first-cycle Coulombic efficiency of the secondary battery.

According to some embodiments of this application, a lithium-containing material is grafted onto the single-walled carbon nanotubes and/or the multi-walled carbon nanotubes, thereby improving the first-cycle Coulombic efficiency of the secondary battery.

According to some embodiments of this application, based on a mass of the undercoating layer, a mass percent of the conductive polymer is 5 wt% to 20 wt%, and the conductive polymer comprises one or more selected from the group consisting of polyaniline, polypyrrole, polythiophene, polyphenylene sulfide, polyacetylene, polyphenylene, poly(p-phenylene vinylene), and poly(3,4-ethylene dioxythiophene).

According to some embodiments of this application, the conductive polymer assumes a microporous structure containing a solid solvation cage.

According to some embodiments of this application, based on a mass of the undercoating layer, a mass percent of the binder is 5 wt% to 20 wt%, and the binder includes one or more selected from the group consisting of lithium carboxymethyl cellulose, styrene-butadiene rubber, polyvinylidene difluoride, and polypropylene.

According to some embodiments of this application, a thickness of the undercoating layer is 0.01 µm to 1 µm.

A second aspect of this application provides a secondary battery. The secondary battery includes the negative electrode plate according to any one of the above embodiments.

A third aspect of this application provides an electronic device. The electronic device includes the secondary battery.

### DETAILED DESCRIPTION

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes the embodiments of this application in detail. However, this application may be embodied in many different forms, and is in no way construed as being limited to the illustrative embodiments described herein. Rather, the illustrative embodiments are provided in order to impart this application thoroughly in detail to those skilled in the art.

As used herein, the term "and/or" includes any and all combinations of one or more related items enumerated by the term. In addition, understandably, when an element A is referred to as "connecting" an element B, the element A may be directly connected to the element B, or an intermediate element C may exist through which the element A and the element B can be connected to each other indirectly.

Further, the term "may" used in describing an embodiment of this application indicates "one or more embodiments of this application".

The technical terms used herein is intended to describe specific embodiments but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

An embodiment of this application provides a secondary battery. The secondary battery includes a housing and an electrode assembly and an electrolyte solution accommodated in the housing. The electrode assembly includes a positive electrode plate, a negative electrode plate, and a separator disposed between the positive electrode plate and the negative electrode plate.

The negative electrode plate includes a negative current collector, an undercoating layer, and a negative active material layer. The undercoating layer is disposed on a surface of the negative current collector. The negative active material layer is disposed on a surface of the undercoating layer, the surface being oriented away from the negative current collector.

The undercoating layer includes an inorganic conductive agent, a conductive polymer, and a binder. The undercoating layer bonds the negative active material layer to the negative current collector, increases the bonding force between the negative active material layer and the negative current collector, and reduces the risk of detachment of the negative active material layer.

The mass percent of the inorganic conductive agent in the undercoating layer is 60 wt% to 90 wt%. The inorganic conductive agent includes single-walled carbon nanotubes. The lower the defect rate of the carbon nanotubes, the higher the conductivity. The defect rate of the carbon nanotubes may be evaluated by Raman spectroscopy. The Raman spectrum of the carbon nanotubes mainly exhibits a D peak and a G peak. The D peak represents the introduction of SP³ hybridized carbon atoms or the defects of a SP² hybridized network structure. The intensity of the D peak corresponds to the defect rate of carbon nanotubes. The G peak represents an ordered graphene structure induced by SP² hybridized carbon atoms that vibrate in an E_{2g} vibration mode. The intensity of the G peak corresponds to the degree of integrity of the carbon nanotubes. The defect rate of a sidewall of the carbon nanotubes may be characterized by a ratio of a height of the G peak to a height of the D peak (G/D ratio) obtained by Raman spectroscopy. The higher the G/D ratio, the more complete the structure of the carbon nanotubes, and the higher the electronic conductivity. The higher the G/D ratio, the higher the cost of the carbon nanotubes. In this embodiment, the G/D ratio in the Raman spectrum of the single-walled carbon nanotubes is 15 to 120, thereby improving the electrical conductivity, reducing the internal resistance of the secondary battery, and being more cost-efficient. Preferably, the G/D ratio of the Raman spectrum of the single-walled carbon nanotubes is 65 to 120, thereby endowing the secondary battery with a more appropriate internal resistance.

In another embodiment, the inorganic conductive agent further includes multi-walled carbon nanotubes. The multi-walled carbon nanotubes is less costly than the single-walled carbon nanotubes, thereby achieving cost-efficiency. In some embodiments, the G/D ratio of the multi-walled carbon nanotubes is 1 to 6, thereby improving the electrical conductivity, reducing the internal resistance of the secondary battery, and being more cost-efficient. Preferably, the G/D ratio of the multi-walled carbon nanotubes is 4 to 6, thereby endowing the secondary battery with a more appropriate internal resistance.

In an embodiment, the inorganic conductive agent is single-walled carbon nanotubes. Based on a mass of the undercoating layer, a mass percent of the single-walled carbon nanotubes is 60 wt% to 90 wt%. In another embodiment, the inorganic conductive agent is single-walled carbon nanotubes and multi-walled carbon nanotubes. Based on a mass of the undercoating layer, a mass percent of the single-walled carbon nanotubes is 40 wt% to 80 wt%, and a mass percent of the multi-walled carbon nanotubes is 10 wt% to 50 wt%.

In some embodiments, metal nanoparticles are deposited on a surface of the single-walled carbon nanotubes and/or a surface of the multi-walled carbon nanotubes. The metal nanoparticles are deposited on the surface of the carbon nanotubes and are distributed along the radial direction of the carbon nanotubes. The metal nanoparticles may be deposited on the surface of the carbon nanotubes by electrodepositing or other well-known methods. With the carbon nanotubes modified by the metal nanoparticles, the electrical conductivity of the carbon nanotubes is improved, the internal resistance of the secondary battery is reduced, and the discharge capacity of the secondary battery is improved, thereby improving the first-cycle Coulombic efficiency of the secondary battery. The metal nanoparticles may include one or more selected from the group consisting of Au, Ag, and Pt.

In some embodiments, a lithium-containing material is grafted onto the single-walled carbon nanotubes and/or the multi-walled carbon nanotubes. The lithium-containing material includes one or more of metallic lithium, a lithium compound, or a lithium alloy. The lithium-containing material may be grafted to the carbon nanotubes by a well-known and appropriate grafting method. For example, the lithium-containing material is grafted onto the surface of the carbon nanotubes by electrodepositing. Grafting the lithium-containing material to the carbon nanotubes is equivalent to pre-lithiation, and improves the discharge capacity and the first-cycle Coulombic efficiency of the secondary battery while reducing the internal resistance of the secondary battery.

Based on a mass of the undercoating layer, a mass percent of the conductive polymer is 5 wt% to 20 wt%. The conductive polymer comprises one or more selected from the group consisting of polyaniline, polypyrrole, polythiophene, polyphenylene sulfide, polyacetylene, polyphenylene, poly(p-phenylene vinylene), and poly(3,4-ethylene dioxythiophene). Such polymers is of excellent electrical conductivity. An alternate-double-and-single bond structure exists on a main chain of the polymers. The π-bond in the polymers allows electrons to move and migrate freely within a molecule, thereby reducing the internal resistance of the secondary battery.

In some embodiments, the conductive polymers assume a microporous structure containing a solid solvation cage to facilitate the distribution of lithium ions, drive the transport of lithium ions, and improve electronic conductivity. The microporous structure containing a solid solvation cage is formed in the following way: modifying a dicatechol monomer through chemical reactions to diversify the monomer, so as to introduce a Li⁺-coordinated functional group into a microporous polymer; and connecting the microporous polymer topologically to different pore structures to implement a polymerization reaction with enhanced topology and implement several polymerization reactions that diversify pore geometries and dielectric properties. The intermediate layer of the Li⁺ solid solvation cage suppresses formation of lithium dendrites during charging, alleviates the polarization of the secondary battery, and reduces the probability of overpotential during cycling of the secondary battery, thereby not only increasing the capacity of the secondary battery but also reducing the probability of overpotential during charging and discharging.

In some embodiments, the mass percent of the binder is 5 wt% to 20 wt%, and the binder includes one or more selected from the group consisting of lithium carboxymethyl cellulose (CMC-Li), styrene-butadiene rubber (SBR), polyvinylidene difluoride (PVDF), and polypropylene (PP).

In some embodiments, the thickness of the undercoating layer is 0.01 µm to 1 µm. With the thickness of the undercoating layer controlled to fall within the above range, the impact of the undercoating layer on the energy density is reduced while ensuring a sufficient bonding force of the undercoating layer. Preferably, the thickness of the undercoating layer is 0.5 µm to 1 µm, so that the undercoating layer possesses a more appropriate bonding force.

The negative current collector may be any known current collector, for example, a copper foil, a copper alloy foil, or a composite current collector.

The negative active material layer includes a negative active material. The negative active material may include at least one of graphite, hard carbon, soft carbon, silicon, a silicon-carbon composite, or an oxide of silicon. The negative active material layer may further include a conductive agent and a binder. The conductive agent may include one or more selected from the group consisting of conductive carbon black, carbon nanotubes, carbon fibers, and graphene. The binder may include one or more selected from the group consisting of styrene-butadiene rubber, polyvinyl alcohol, polytetrafluoroethylene, polyvinylidene difluoride, and sodium carboxymethyl cellulose.

The positive electrode plate includes a positive current collector and a positive active material layer disposed on a surface of the positive current collector. The positive current collector may be any known current collector, for example, a copper foil, a copper alloy foil, or a composite current collector. The positive active material layer includes a positive active material. The positive active material may include one or more selected from the group consisting of lithium cobalt oxide, lithium nickel oxide, lithium manganese oxide, lithium iron phosphate, and lithium cobalt phosphate. The positive active material layer may further include a conductive agent and a binder. The conductive agent may include one or more selected from the group consisting of conductive carbon black, carbon nanotubes, carbon fibers, and graphene. The binder may include one or more selected from the group consisting of styrene-butadiene rubber, polyvinyl alcohol, polytetrafluoroethylene, polyvinylidene difluoride, and sodium carboxymethyl cellulose.

The separator may be any known separator. For example, the separator may be a thin film made of one or more materials selected from the group consisting of polyethylene, polypropylene, non-woven fabric, and polyfibers.

The electrolyte solution may be any known electrolyte solution. For example, the electrolyte solution is a solution that includes a solvent and a solute, where the solvent includes one or more carbonic organic esters selected from the group consisting of ethylene carbonate, propylene carbonate, dimethyl carbonate, diethyl carbonate, and ethyl methyl carbonate, and the solute includes one or more lithium salts selected from the group consisting of LiPF₆, LiBF₄, LiBOB, LiAsF₆, Li(CF₃SO₂)₂N, and LiCF₃SO₃.

The housing may be any housing known as applicable to secondary batteries. For example, the housing may be a packaging bag formed of a sealing film, such as an aluminum laminated film or a steel laminated film; or, the housing may be a metal shell, such as a steel shell or an aluminum shell.

An embodiment of this application provides an electronic device. The electronic device includes the secondary battery. The electronic device may be a consumer electronic device, an unmanned aerial vehicle, an electrical tool, an energy storage device, an electric vehicle, or the like.

Some specific embodiments and comparative embodiments are enumerated below to give a clearer description of this application, using a lithium-ion battery as an example.

### Embodiment 1

**Preparing a positive electrode plate:** Dissolving lithium cobalt oxide, conductive carbon black, and polyvinylidene difluoride at a mass ratio of 97.5: 1.0: 1.5 in an N-methylpyrrolidone solution to form a positive electrode slurry in which the solid content is 75%. Using an aluminum foil as a positive current collector, applying the positive electrode slurry onto a surface of the positive current collector to obtain a positive active material layer, and performing drying, cold-pressing, and cutting to obtain a positive electrode plate.

**Preparing a negative electrode plate:** Mixing 80 wt% inorganic conductive agent (single-walled carbon nanotubes in which the G/D ratio is 65), 10 wt% conductive polymer (polypyrrole), 10 wt% binder (5 wt% CMC-Li and 5 wt% PVDF), and an appropriate amount of water to form a coating slurry. Using a copper foil as a negative current collector, applying the coating slurry onto a surface of the negative current collector, and performing drying to obtain an undercoating layer of 0.25 µm in thickness. Mixing 97.7 wt% graphite, 1.3 wt% sodium carboxymethyl cellulose, 1.0 wt% styrene-butadiene rubber, and an appropriate amount of deionized water to form a negative electrode slurry. Applying the negative electrode slurry to a surface of the undercoating layer, and drying the slurry to obtain a negative active material layer. Subsequently, performing cold-pressing and cutting to obtain a negative electrode plate.

**Preparing a separator:** Using a polyethylene film as a separator.

**Preparing an electrolyte solution:** Mixing an ethylene carbonate (EC), diethyl carbonate (DEC), propylene carbonate (PC), propyl propionate (PP, and vinylene carbonate (VC) at a mass ratio of 20: 30: 20: 28: 2 to obtain an organic solvent, and then mixing a fully dried lithium salt LiPF₆ with the organic solvent at a mass ratio of 8: 92 to obtain an electrolyte solution.

**Preparing a lithium-ion battery:** Stacking the positive electrode plate, a polyethylene separator, and the negative electrode plate sequentially in such a way that the separator is located between the positive electrode plate and the negative electrode plate, and winding the stacked structure to obtain an electrode assembly. Putting the electrode assembly into an aluminum laminated film, and performing electrolyte injection and chemical formation to obtain an lithium-ion battery.

### Embodiments 2 to 5

Identical to Embodiment 1 except the thickness of the undercoating layer. The thicknesses of the undercoating layers in Embodiments 1 to 5 are shown in Table 1.

**Table 1**

| Item | Thickness of undercoating layer |
|---|---|
| Embodiment 1 | 0.25 µm |
| Embodiment 2 | 0.01 µm |
| Embodiment 3 | 0.50 µm |
| Embodiment 4 | 0.80 µm |
| Embodiment 5 | 1.00 µm |

### Embodiments 6 to 7 and Comparative Embodiments 1 to 2

Identical to Embodiment 1 except the G/D ratio of the single-walled carbon nanotubes (CNT). The G/D ratios of the single-walled carbon nanotubes in Embodiments 6 to 7 and Comparative Embodiments 1 to 2 are shown in Table 2.

**Table 2**

| Item | G/D ratio of single-walled CNT |
|---|---|
| Embodiment 1 | 65 |
| Embodiment 6 | 15 |
| Embodiment 7 | 120 |
| Comparative Embodiment 1 | 10 |
| Comparative Embodiment 2 | 150 |

### Embodiments 8 to 11

Identical to Embodiment 1 except at least two of: the mass percent of the inorganic conductive agent (single-walled carbon nanotubes), the mass percent of the binder (CMC-Li and PVDF), or the mass percent of the conductive polymer (polypyrrole) in the undercoating layer. The mass percent of each constituent in the undercoating layer in Embodiments 8 to 11 is shown in Table 3.

**Table 3**

| Item | Single-walled CNT | G/D | CMC-Li | PVDF | Polypyrrole |
|---|---|---|---|---|---|
| Embodiment 1 | 80 wt% | 65 | 5 wt% | 5 wt% | 10 wt% |
| Embodiment 8 | 50 wt% | 65 | 10 wt% | 10 wt% | 30 wt% |
| Embodiment 9 | 60 wt% | 65 | 10 wt% | 10 wt% | 20 wt% |
| Embodiment 10 | 90 wt% | 65 | 2.5 wt% | 2.5 wt% | 5 wt% |
| Embodiment 11 | 95 wt% | 65 | 1.5 wt% | 1.5 wt% | 2 wt% |

### Embodiments 12 to 19

Identical to Embodiment 1 except at least one of: the constituents of the binder in the undercoating layer, or the constituents of the conductive polymer. The binder in the undercoating layer and the conductive polymer in Embodiments 12 to 19 are shown in Table 4.

| Item | Constituents of binder | | | | Constituents of conductive polymer | | | | | | | |
|---|---|---|---|---|---|---|---|---|---|---|---|---|
| | CMC-Li | PVDF | SBR | PAA | Polyaniline | Polypyrrole | Polythiophene | Polyphenylene sulfide | Polyphenylene | Poly(p-phenylene vinylene) | 3,4-ethylene dioxythiophene | Polyacetylene |
| Embodiment 1 | 5 wt% | 5 wt% | / | / | / | 10 wt% | / | / | / | / | / | / |
| Embodiment 12 | 5 wt% | / | 5 wt% | / | | 10 wt% | / | / | / | / | / | / |
| Embodiment 13 | 5 wt% | / | / | 5 wt% | / | 10 wt% | / | / | / | / | / | / |
| Embodiment 14 | 5 wt% | 5 wt% | / | / | / | / | 10 wt% | / | / | / | / | / |
| Embodiment 15 | 5 wt% | 5 wt% | / | / | / | / | / | 10 wt% | / | / | / | / |
| Embodiment 16 | 5 wt% | 5 wt% | / | / | / | / | / | / | 10 wt% | / | / | / |
| Embodiment 17 | 5 wt% | 5 wt% | / | / | / | / | / | / | / | 10 wt% | / | / |
| Embodiment 18 | 5 wt% | 5 wt% | / | / | / | / | / | / | / | / | 10 wt% | / |
| Embodiment 19 | 5 wt% | 5 wt% | / | / | / | / | / | / | / | / | / | 10 wt% |

### Embodiments 20 to 32

Identical to Embodiment 1 except the constituents of the undercoating layer. Specifically, the inorganic conductive agents in Embodiments 20 to 32 further include multi-walled carbon nanotubes. The constituents of the undercoating layer in Embodiments 20 to 32 are shown in Table 5.

**Table 5**

| Item | Multi-walled CNT | G/D ratio of multi-walled CNT | Single-walled CNT | G/D ratio of single-walled CNT | CMC-Li | PVDF | Polypyrrole |
|---|---|---|---|---|---|---|---|
| Embodiment 1 | / | / | 80 wt% | 65 | 5 wt% | 5 wt% | 10 wt% |
| Embodiment 20 | 15 wt% | 4 | 75 wt% | 65 | 2.5 wt% | 2.5 wt% | 5 wt% |
| Embodiment 21 | 25 wt% | 4 | 65 wt% | 65 | 2.5 wt% | 2.5 wt% | 5 wt% |
| Embodiment 22 | 35 wt% | 4 | 55 wt% | 65 | 2.5 wt% | 2.5 wt% | 5 wt% |
| Embodiment 23 | 45 wt% | 4 | 45 wt% | 65 | 2.5 wt% | 2.5 wt% | 5 wt% |
| Embodiment 24 | 10 wt% | 4 | 80 wt% | 65 | 2.5 wt% | 2.5 wt% | 5 wt% |
| Embodiment 25 | 50 wt% | 4 | 40 wt% | 65 | 2.5 wt% | 2.5 wt% | 5 wt% |
| Embodiment 26 | 5 wt% | 4 | 85 wt% | 65 | 2.5 wt% | 2.5 wt% | 5 wt% |
| Embodiment 27 | 55 wt% | 4 | 35 wt% | 65 | 2.5 wt% | 2.5 wt% | 5 wt% |
| Embodiment 28 | 20 wt% | 1 | 60 wt% | 65 | 5 wt% | 5 wt% | 10 wt% |
| Embodiment 29 | 20 wt% | 6 | 60 wt% | 65 | 5 wt% | 5 wt% | 10 wt% |
| Embodiment 30 | 20 wt% | 7 | 60 wt% | 65 | 5 wt% | 5 wt% | 10 wt% |
| Embodiment 31 | 20 wt% | 0.5 | 60 wt% | 65 | 5 wt% | 5 wt% | 10 wt% |
| Embodiment 32 | 20 wt% | 4 | 60 wt% | 65 | 5 wt% | 5 wt% | 10 wt% |

### Embodiments 33 to 35

Identical to Embodiment 1 except that metal nanoparticles are deposited on the single-walled carbon nanotubes. Specifically, in Embodiments 33 to 35, Au, Ag, and Pt nanoparticles are deposited on the single-walled carbon nanotubes, respectively.

### Embodiment 36

Identical to Embodiment 20 except that metal nanoparticles are deposited on the multi-walled carbon nanotubes.

### Embodiment 37

Identical to Embodiment 1 except that metallic lithium is grafted onto the single-walled carbon nanotubes.

### Embodiment 38

Identical to Embodiment 22 except that metallic lithium is grafted onto the multi-walled carbon nanotubes.

### Embodiment 39

Identical to Embodiment 1 except that the conductive polymer (polypyrrole) assumes a microporous structure containing a solid solvation cage.

### Comparative Embodiment 3

Identical to Embodiment 1 except that the negative electrode plate contains no undercoating layer. Specifically, the negative active material layer is directly formed on a surface of the negative current collector.

### Comparative Embodiment 4

Identical to Embodiment 1 except the constituents of the undercoating layer. Specifically, the undercoating layer includes: 80 wt% multi-walled carbon nanotubes (G/D = 4), 5 wt% CMC-Li, 5 wt% PVDF, and 10 wt% polypyrrole.

### Comparative Embodiment 5

Identical to Embodiment 1 except the constituents of the undercoating layer. Specifically, the undercoating layer includes: 80 wt% multi-walled carbon nanotubes (G/D = 4), and 20 wt% PVDF.

The lithium-ion batteries prepared in each embodiment and each comparative embodiment are subjected to the following tests, and the test results are shown in Table 6.

**Testing the peel force of the negative electrode plate:** Peeling the negative active material layer from the negative current collector or the undercoating layer at a 180° angle, and measuring the peel force (that is, the bonding force of the negative electrode plate) with a tensile testing machine in accordance with GB/T 2792-2014.

### Testing the direct current resistance:

Charging, at a temperature of 25 °C, a lithium-ion battery at a constant current of 15.4 A until the voltage reaches 4.2 V, and then charging the battery at a constant current of 6C until the voltage reaches 4.23 V, and then charging the battery at a constant current of 4C until the voltage reaches 4.3, and then charging the battery at a constant current of 3.2C until the voltage reaches 4.5 V, and then charging the battery at a constant current of 2.2C until the voltage reaches 4.55 V, and then charging the battery at a constant voltage of 4.55 V until the current drops to 0.55C, and leaving the battery to stand for 10 min. Subsequently, charging the battery at a constant current of 2 A until the voltage reaches 4.5 V, and then charging the battery at a constant voltage of 4.5 V until the current drops to 0.05C, and leaving the battery to stand for 5 min, and then discharging the battery at a constant current of 1C until the voltage reaches 3 V, and leaving the battery to stand for 5 min. The above steps complete one cycle. Repeat the above steps to complete 200, 500, and 800 cycles.

Discharging the lithium-ion battery at 25 °C at a constant current of 0.2C until the voltage reaches 3 V, leaving the battery to stand for 10 min, and then charging the battery at a constant current of 1C until the voltage reaches 3.6 V, and then charging the battery at a constant voltage of 3.6 V until the current drops to 0.02 C. Collecting the direct current resistances before cycling and at the end of 200 cycles, 500 cycles, and 800 cycles separately. DCR growth rate = (direct current resistance after cycling - direct current resistance before cycling)/direct current resistance before cycling × 100*%* Calculating the DCR growth rates at the end of 200 cycles, 500 cycles, and 800 cycles, separately.

### Testing the first-cycle Coulombic efficiency:

Charging the lithium-ion battery at 25 °C at a constant current of 0.2C until the voltage reaches 4.5 V, and then charging the battery at a constant voltage of 4.5 V until the current drops to 0.05C, and recording the charge capacity at this time as C. Subsequently, discharging the battery at a constant current of 0.2C until the voltage reaches 3 V, and recording the discharge capacity at this time as DC. First-cycle Coulombic efficiency = DC/C × 100*%*.

**Table 6**

| Item | Peel force (N/m) | DCR growth rate | | | First-cycle Coulombic efficiency |
|---|---|---|---|---|---|
| | | 200 cycles | 500 cycles | 800 cycles | |
| Embodiment 1 | 24.3 | 58.9% | 83.5% | 125.4% | 92.45% |
| Embodiment 2 | 10.1 | 78.6% | 104.7% | 148.6% | 91.78% |
| Embodiment 3 | 29.5 | 51.2% | 74.2% | 117.2% | 92.62% |
| Embodiment 4 | 32.7 | 49.2% | 71.3% | 113.3% | 92.75% |
| Embodiment 5 | 35.4 | 48.6% | 69.8% | 110.5% | 92.83% |
| Embodiment 6 | 24.2 | 59.4% | 88.2% | 131.5% | 92.07% |
| Embodiment 7 | 24.4 | 58.4% | 81.9% | 123.7% | 92.61% |
| Embodiment 8 | 26.7 | 61.9% | 88.9% | 138.2% | 92.17% |
| Embodiment 9 | 26.6 | 60.8% | 86.5% | 132.6% | 92.31% |
| Embodiment 10 | 20.8 | 55.6% | 79.8% | 117.5% | 92.58% |
| Embodiment 11 | 20.1 | 55.1% | 78.4% | 114.2% | 92.73% |
| Embodiment 12 | 24.5 | 57.5% | 82.9% | 124.8% | 92.85% |
| Embodiment 13 | 24.8 | 56.4% | 81.3% | 123.5% | 93.02% |
| Embodiment 14 | 24.4 | 59.1% | 83.7% | 125.6% | 92.65% |
| Embodiment 15 | 23.9 | 58.6% | 83.2% | 125.2% | 92.25% |
| Embodiment 16 | 24.1 | 58.8% | 83.4% | 125.1% | 92.15% |
| Embodiment 17 | 24.6 | 59.4% | 84.1% | 126.1% | 92.75% |
| Embodiment 18 | 23.7 | 58.2% | 83.2% | 125.3% | 92.35% |
| Embodiment 19 | 24.2 | 58.7% | 83.3% | 125.2% | 92.31% |
| Embodiment 20 | 24.1 | 59.1% | 87.2% | 127.9% | 92.28% |
| Embodiment 21 | 24.2 | 60.2% | 88.9% | 130.1% | 92.13% |
| Embodiment 22 | 24.3 | 61.4% | 89.2% | 133.8% | 92.04% |
| Embodiment 23 | 24.1 | 62.8% | 89.7% | 135.4% | 91.37% |
| Embodiment 24 | 24.2 | 57.4% | 86.8% | 125.6% | 92.19% |
| Embodiment 25 | 24.3 | 63.5% | 90.5% | 136.1% | 91.67 |
| Embodiment 26 | 24.2 | 56.9% | 85.4% | 123.8% | 92.27% |
| Embodiment 27 | 24.3 | 64.1% | 84.7% | 136.7% | 91.55% |
| Embodiment 28 | 23.2 | 62.4% | 89.5% | 132.1% | 91.88% |
| Embodiment 29 | 23.4 | 60.5% | 87.6% | 129.4% | 92.59% |
| Embodiment 30 | 23.2 | 60.2% | 87.3% | 128.9% | 92.71% |
| Embodiment 31 | 23.1 | 65.1% | 90.8% | 135.4% | 91.24% |
| Embodiment 32 | 23.3 | 60.9% | 88.1% | 130.1% | 92.1% |
| Embodiment 33 | 24.4 | 57.7% | 82.1% | 123.9% | 92.78% |
| Embodiment 34 | 24.2 | 56.5% | 80.4% | 121.3% | 93.14% |
| Embodiment 35 | 24.1 | 58.3% | 82.9% | 124.8% | 92.55% |
| Embodiment 36 | 24.2 | 58.7% | 86.8% | 127.2% | 92.47% |
| Embodiment 37 | 24.5 | 57.9% | 82.5% | 124.8% | 92.69% |
| Embodiment 38 | 24.3 | 58.1% | 86.2% | 126.9% | 92.38% |
| Embodiment 39 | 24.4 | 58.1% | 82.7% | 124.9% | 92.52% |
| Comparative Embodiment 1 | 24.3 | 60.5% | 91.6% | 138.3% | 91.85% |
| Comparative Embodiment 2 | 24.2 | 58.0*%* | 80.8% | 122.8% | 92.72% |
| Comparative Embodiment 3 | 5.2 | 80.1% | 110.2% | 159.9% | 91.25% |
| Comparative Embodiment 4 | 7.5 | 82.0% | 113.1% | 162.7% | 90.51% |
| Comparative Embodiment 5 | 9.8 | 83.2% | 115.5% | 164.9% | 90.13% |

As can be seen from Embodiments 1 to 39 and Comparative Embodiments 1 to 5, the undercoating layer containing single-walled carbon nanotubes can improve the bonding force (peel force) of the negative electrode plate, reduce the internal resistance of the lithium-ion battery, and improve the first-cycle Coulombic efficiency concurrently.

As can be seen from Embodiments 1 to 5, with the increase of the thickness of the undercoating layer, the bonding force of the negative electrode plate increases, the internal resistance of the lithium-ion battery decreases, and the first-cycle Coulombic efficiency of the lithium-ion battery increases. When the thickness is greater than 0.50 µm, the tendency of the internal resistance of the lithium-ion battery to decrease slows down.

As can be seen from Embodiment 1, Embodiments 6 to 7, and Comparative Embodiments 1 to 2, with the increase of the G/D ratio of the single-walled carbon nanotubes, the internal resistance of the lithium-ion battery shows a tendency to decrease, and the first-cycle Coulombic efficiency of the lithium-ion battery shows a tendency to increase. When the G/D ratio is greater than 65, the tendency of the bonding force of the negative electrode plate to increase slows down, the tendency of the internal resistance of the lithium-ion battery to decrease slows down, and the tendency of the first-cycle Coulombic efficiency of the lithium-ion battery to increase slows down.

As can be seen from Embodiment 1 and Embodiments 8 to 11, with the increase of the content of the binder, or with the decrease of the content of the inorganic conductive agent (single-walled carbon nanotubes), or with the increase of the content of the conductive polymer, both the bonding force of the negative electrode plate and the resistance of the lithium-ion battery show an approximate tendency to increase, and the first-cycle Coulombic efficiency of the lithium-ion battery shows an approximate tendency to decrease. As can be seen from Embodiment 1 and Embodiments 8 to 19, when the undercoating layer includes an inorganic conductive agent at a mass percent of 60 wt% to 90 wt%, a conductive polymer at a mass percent of 5 wt% to 20 wt%, and a binder at a mass percent of 5 wt% to 20 wt%, the bonding force of the negative electrode plate is relatively large, the internal resistance of the lithium-ion battery is relatively low, and the first-cycle Coulombic efficiency of the lithium-ion battery is relatively high. As can be seen from Embodiments 20 to 27, with the increase of the mass percent of the multi-walled carbon nanotubes, the internal resistance of the lithium-ion battery shows a tendency to increase. When the mass percent of the multi-walled carbon nanotubes is 10 wt% to 50 wt% and the mass percent of the single-walled carbon nanotubes is 40 wt% to 80 wt%, the internal resistance of the lithium-ion battery is relatively low.

As can be seen from Embodiments 28 to 32, with the increase of the G/D ratio of the multi-walled carbon nanotubes, the internal resistance of the lithium-ion battery shows a tendency to decrease, and the first-cycle Coulombic efficiency of the lithium-ion battery shows a tendency to increase. When the G/D ratio of the multi-walled carbon nanotubes is greater than 4, both the tendency of the internal resistance of the lithium-ion battery to decrease and the tendency of the first-cycle Coulombic efficiency of the lithium-ion battery to increase slow down.

As can be seen from Embodiment 1 and 20 and Embodiments 33 to 36, when metal nanoparticles are deposited on the carbon nanotubes, the internal resistance of the lithium-ion battery is reduced, and the first-cycle Coulombic efficiency of the lithium-ion battery is improved.

As can be seen from Embodiments 1 and 20 and Embodiments 37 to 38, when lithium metal is grafted to the carbon nanotubes, the internal resistance of the lithium-ion battery is reduced, and the first-cycle Coulombic efficiency of the lithium-ion battery is improved.

As can be seen from Embodiments 1 and 39, when the conductive polymer assumes a microporous structure containing a solid solvation cage, the internal resistance of the lithium-ion battery is reduced, and the first-cycle Coulombic efficiency of the lithium-ion battery is improved.

What is disclosed above is merely exemplary embodiments of this application, and in no way constitutes a limitation on this application. Therefore, any and all equivalent variations made based on this application still fall within the scope covered by this application.

## Claims

1. A negative electrode plate, **characterized in that**, the negative electrode plate comprises:
a negative current collector;
an undercoating layer disposed on a surface of the negative current collector;
wherein the undercoating layer comprises an inorganic conductive agent, a conductive polymer, and a binder; the inorganic conductive agent comprises single-walled carbon nanotubes; and a G/D ratio of a Raman spectrum of the single-walled carbon nanotubes is 15 to 120; and
a negative active material layer disposed on a surface of the undercoating layer.

2. The negative electrode plate according to claim 1, **characterized in that**, the G/D ratio of the Raman spectrum of the single-walled carbon nanotubes is 65 to 120.

3. The negative electrode plate according to claim 1 or 2, **characterized in that**, the inorganic conductive agent further comprises multi-walled carbon nanotubes; and a G/D ratio of a Raman spectrum of the multi-walled carbon nanotubes is 1 to 6.

4. The negative electrode plate according to claim 3, **characterized in that**, the G/D ratio of the Raman spectrum of the multi-walled carbon nanotubes is 4 to 6.

5. The negative electrode plate according to claim 3, **characterized in that**, based on a mass of the undercoating layer, a mass percent of the single-walled carbon nanotubes is 40 wt% to 80 wt%; and a mass percent of the multi-walled carbon nanotubes is 10 wt% to 50 wt%.

6. The negative electrode plate according to any one of claims 3 to 5, **characterized in that**, metal nanoparticles are deposited on a surface of the single-walled carbon nanotubes and/or a surface of the multi-walled carbon nanotubes.

7. The negative electrode plate according to any one of claims 3-5, **characterized in that**, a lithium-containing material is grafted onto the single-walled carbon nanotubes and/or the multi-walled carbon nanotubes.

8. The negative electrode plate according to claim 1, **characterized in that**, based on a mass of the undercoating layer, a mass percent of the single-walled carbon nanotubes is 60 wt% to 90 wt%.

9. The negative electrode plate according to any one of claims 1 to 8, **characterized in that**, based on a mass of the undercoating layer, a mass percent of the conductive polymer is 5 wt% to 20 wt%; and the conductive polymer comprises one or more selected from the group consisting of polyaniline, polypyrrole, polythiophene, polyphenylene sulfide, polyacetylene, polyphenylene, poly(p-phenylene vinylene), and poly(3,4-ethylene dioxythiophene).

10. The negative electrode plate according to any one of claims 1 to 9, **characterized in that**, the conductive polymer has a microporous structure containing a solid solvation cage.

11. The negative electrode plate according to any one of claims 1 to 10, **characterized in that**, based on a mass of the undercoating layer, a mass percent of the binder is 5 wt% to 20 wt%; and the binder comprises one or more selected from the group consisting of lithium carboxymethyl cellulose, styrene-butadiene rubber, polyvinylidene difluoride, and polypropylene.

12. The negative electrode plate according to any one of claims 1 to 11, **characterized in that**, a thickness of the undercoating layer is 0.01 µm to 1 µm.

13. A secondary battery, **characterized in that**, the secondary battery comprises the negative electrode plate according to any one of claims 1 to 12.

14. An electronic device, **characterized in that**, the electronic device comprises the secondary battery according to claim 13.
